# EUROPEAN PATENT APPLICATION

(11) **EP 2 392 834 A1**
(43) Date of publication of application: **07.12.2011**
(21) Application number: 11168362.9
(22) Date of filing: 01.06.2011
(51) Int. Cl.: F16D 3/76, F16F 15/124, F16H 55/36

(54) **Harmonic balancer**

(30) Priority: 03.06.2010 JP 2010127732; 14.06.2010 JP 2010134853
(71) Applicant: JTEKT Corporation, Osaka-shi, Osaka 542-8502 (JP)
(72) Inventor: Moriya, Masaoki, Osaka-shi,, Osaka 542-8502 (JP)
(74) Representative: TBK

(57) **Abstract**

A harmonic balancer (10) includes: a hub (11); a pulley (13); an annular inertial mass (12); and an elastically deformable second elastic material member (15) whose inner peripheral side is connected to an outer periphery of an inner hub portion (11A) and whose outer peripheral side is connected to an inner periphery of an inner pulley portion (23). An inner peripheral surface of the inner pulley portion (23) the pulley (13) includes a radially protruded portion (24: 54: 31A). The second elastic material member (15) has a depression portion that is depressed radially inward. The protruded portion (24: 54: 31A) is fitted in the depression portion. Selected Drawing: FIG. 1

## Description

### 1. Field of the Invention

The invention relates to a harmonic balancer that absorbs torsional vibrations transmitted from an engine in a motor vehicle or the like and that transmits rotation from the engine to accessories and the like.

### 2. Description of Related Art

Some of the drive force from an engine of a motor vehicle is transmitted from a pulley attached to an axial end of a crankshaft to accessories, for example, an alternator, a water pump, etc., via an endless belt. Because the crankshaft is rotated with rotational fluctuations (torque fluctuations) due to the engine, a pulley is equipped, in some cases, with a harmonic balancer to reduce the torsional vibrations.

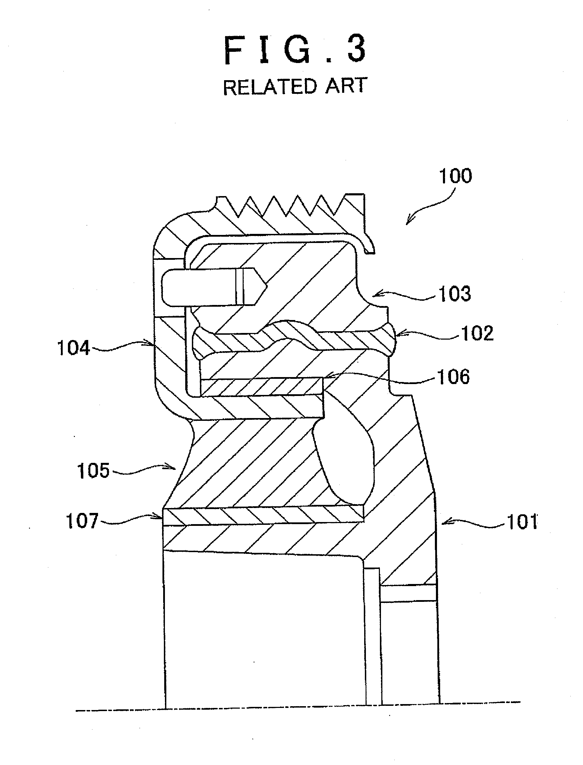

A conventional pulley that includes with a harmonic damper is a damper pulley 100 that is shown in FIG. 3 of this application and that is described in, for example, Japanese Utility Model Registration No. 2605662. The damper pulley 100 includes an inertial mass 103 that is connected to the outer periphery of a hub 101 attached to an axial end of a crankshaft via a first elastic material piece 102 so that the inertial mass 103 rotates together with the crankshaft. A second elastic material piece 105 connects the hub 101 with the pulley 104. The damper pulley 100 damps rotational vibration transmitted from the crankshaft to the hub 101 via the first elastic material piece 102, and transmits rotational torque from the crankshaft to the hub 101 to the pulley 104 while absorbing torsional vibrations from the crankshaft to the hub 101 using the rotational-direction shearing deformation effect caused at the second elastomer body 105. A radial bearing 106 is interposed between the hub 101 and the pulley 104, and radially supports the pulley 104 on the hub 101.

A second damper pulley 110 shown in FIG. 4 which is described in, for example, Japanese Patent Application Publication No. 2006-322573 (JP-A-2006-322573). In the second damper pulley 110, an inertial mass 113 is connected, via a first elastic material piece 112, to an outer periphery of a hub 111 that is attached to an axial end of a crankshaft. A second elastic material piece 115 connects the hub 111 with the pulley 114. The damper pulley 110 damps rotational vibration that is input from the crankshaft to the hub 111 via the first elastic material piece 112, and transmits rotation input from the crankshaft to the hub 111, to the pulley 114, while absorbing torsional vibrations from the crankshaft to the hub 111 due to the rotational-direction shearing deformation effect of the second elastic material piece 115. A radial bearing 116 is interposed between the inertial mass 113 and the pulley 114, and has such a structure as to radially support the pulley 114 onto the hub 111.

In the harmonic balancer described in Japanese Utility Mode Registration No. 2605662, since the second elastic material piece 105 is disposed in a radial direction between the pulley 104 and a ring 107, the length of the damper pulley in the direction of the axis can be made shorter (than in a damper pulley whose second elastic material piece is disposed in a direction of an axis). Besides, the harmonic balancer is easy to produce, since the pulley 104 and the hub 100 can be integrated by pressing the ring 107 into the hub 100 after adhering the second elastic material piece 105 to the pulley 104 and the ring 107 by vulcanisation bonding. However, it is not possible to reduce vibration in the axial direction of the pulley 104.

In the harmonic balancer described in Japanese Patent Application Publication No. 2006-322573 (JP-A-2006-322573), it is possible to restrain vibration in the axial direction of the pulley 114 because the second elastic material piece 115 is disposed in the axial direction between the hub 110 and the ring 117 and because the pulley 114 is inserted in an intermediate portion of the second elastic material piece 115 in the direction of the axis. However, in the above harmonic balancer, because the second elastic material piece 115 is disposed in the axial direction, the axial length of the damper pulley 110 is longer than that of a damper pulley in which the second elastic material piece is disposed radially. Furthermore, in this harmonic balancer, a front portion 115a of the second elastic material piece 115 in the axial direction is vulcanised-bonded to the pulley 114 and the ring 117, and a rear portion of the second elastic material piece 115 in the axial direction is vulcanised-bonded to the pulley 114, and then the ring 117 is pressed onto the hub 111. After that, the rear portion of the second second elastic material piece 115 is attached to the hub 111 with an adhesive. Due to the two separate adhesion processes by vulcanised bonding and by using an adhesion, the number of man hours increases.

### SUMMARY OF THE INVENTION

A first aspect of the invention relates to a harmonic balancer that includes: a hub whose cylindrical outer hub portion is connected to an outer peripheral side of a disc-shape connecting hub portion and whose cylindrical inner hub portion is connected to an inner peripheral side of the disc-shape connecting hub portion; a pulley whose cylindrical outer pulley portion is connected to an outer peripheral side of a disc-shape connecting pulley portion and whose cylindrical inner pulley portion is connected to an inner peripheral side of the disc-shape connecting pulley portion; an annular inertial mass disposed at an outer peripheral edge of the outer hub portion; an elastically deformable second elastic material member whose inner peripheral side is connected to an outer periphery of the inner hub portion and whose outer peripheral side is connected to an inner periphery of the inner pulley portion; an elastically deformable first elastic material member that interconnects the hub and the inertial mass; and a radial bearing that supports the pulley relative to the hub and that permits the pulley to rotate relative to the hub. A protruded portion that extends radially inward is formed in an inner peripheral surface of the inner pulley portion. A depression that extends in a radially inward direction is formed in the second elastic material member. The protruded portion is fitted in the depression portion.

In the foregoing aspect, the pulley may include a disc-shaped support portion that extends radially inward from the inner peripheral surface of the inner pulley portion. The second elastic material member may be connected to the support portion. The second elastic material member may be substantially equally distributed between an axially front side and an axially rear side of the support portion in a direction of an axis of the pulley. The second elastic material piece may be connected to the inner peripheral surface of the inner pulley portion and to the support portion of the inner pulley portion.

According to the foregoing aspect, since the second elastic material piece is radially disposed, the length of the damper pulley in the direction of the axis can be shortened. Besides, since the second elastic material piece is equally distributed between the front and rear sides of the support portion in the direction of the axis of the pulley, the vibration of the pulley in the axial direction can be restrained.

In the foregoing aspect, the pulley and the support portion may be an integrated member or separate members.

In the foregoing aspect, the inner peripheral surface of the inner pulley portion may include a first inclined surface and a second inclined surface that are oblique to the axis of the pulley and that are substantially symmetric in the direction of the axis about an intermediate portion of the inner peripheral surface in the direction of the axis. The second elastic material member may be connected to the first inclined surface and to the second inclined surface.

According to the foregoing aspect, since the second elastic material piece is radially disposed, the length of the damper pulley in the axial direction can be shortened, in comparison with a damper pulley in which the second elastic material piece is disposed in the axial direction. Besides, when the pulley is vibrated in the axial direction, reaction forces of the compression and pull of the second elastic material piece alternately and repeatedly act on the first inclined surface, so that the reaction forces of the pull and compression of the second elastic material piece alternately and repeatedly act on the second inclined surface. Thus, vibration in the direction of the axis of the pulley can be restrained.

In the foregoing aspect, the protruded portion may be formed by the first inclined surface and the second inclined surface.

In the foregoing aspect, the first inclined surface and the second inclined surface may be formed by bending the inner pulley portion.

In the foregoing aspect, a cylindrical ring may be connected to the inner peripheral side of the second elastic material member, and the ring may be press-fitted to an outer periphery of the inner hub portion.

According to the foregoing aspect, production of the damper pulley becomes easy.

In the foregoing aspect, the second elastic material member may be vulcanised-bonded to an outer peripheral surface of the ring and the inner peripheral surface of the inner pulley portion.

According to the foregoing aspect, production of the damper pulley becomes easier.

In the foregoing aspect, the second elastic material member may be vulcanised-bonded to the outer peripheral surface of the ring, the first inclined surface of the inner pulley portion and the second inclined surface of the inner pulley portion.

According to the foregoing aspect, production of the damper pulley becomes easier.

A second aspect of the invention relates to a harmonic balancer that includes: a hub whose cylindrical outer hub portion is connected to an outer peripheral side of a disc-shape connecting hub portion and whose cylindrical inner hub portion is connected to an inner peripheral side of the disc-shape connecting hub portion; a pulley whose cylindrical outer pulley portion is connected to an outer peripheral side of a disc-shape connecting pulley portion and whose cylindrical inner pulley portion is connected to an inner peripheral side of the disc-shape connecting pulley portion; an annular inertial mass disposed at an outer peripheral edge of the outer hub portion; an elastically deformable second elastic material member whose inner peripheral side is connected to an outer periphery of the inner hub portion and whose outer peripheral side is connected to an inner periphery of the inner pulley portion; an elastically deformable first elastic material member that interconnects the hub and the inertial mass; and a radial bearing that supports the pulley relative to the hub and that permits the pulley to rotate relative to the hub. A depression that extends in a radially outward direction is formed in an inner peripheral surface of the inner pulley portion. A protruded portion that extends radially outward is formed in the second elastic material member. The protruded portion is fitted in the depression portion.

According to the foregoing aspects of the invention, the length of the damper pulley in the axial direction can be shortened, and production of the damper pulley becomes easy. Vibration in the direction of the axis of the pulley can be restrained.

### BRIEF DESCRIPTION OF THE DRAWINGS

Features, advantages, and technical and industrial significance of example embodiments of the invention will be described below with reference to the accompanying drawings, in which like numerals denote like elements, and wherein:
FIG. 1 is a sectional view of a harmonic balancer according to a first embodiment of the invention;
FIG. 2 is a sectional view of a harmonic balancer according to a modification of the first embodiment of the invention;
FIG. 3 is a sectional view of a related-art harmonic balancer in which a second elastic material piece is radially disposed;

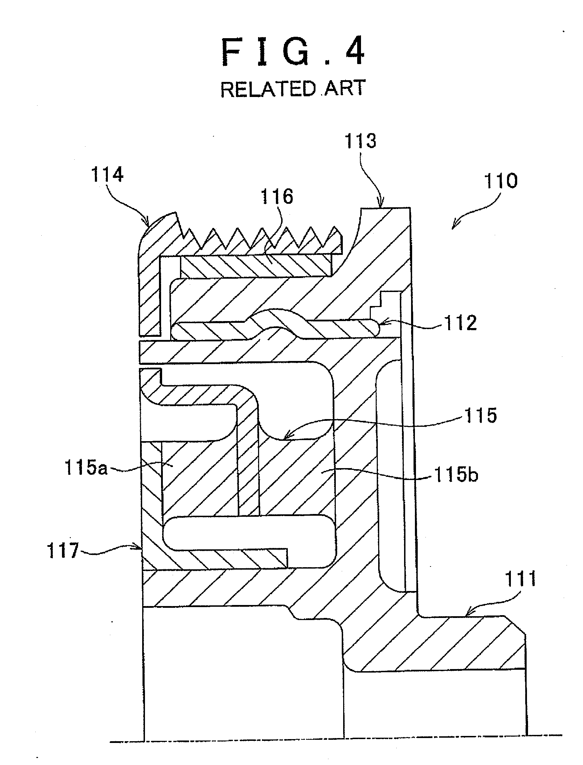

FIG. 4 is a sectional view of a related-art harmonic balancer in which a second elastic material piece is axially disposed; and
FIG. 5 is a sectional view of a harmonic balancer according to a second embodiment of the invention.

### DETAILED DESCRIPTION OF EMBODIMENTS

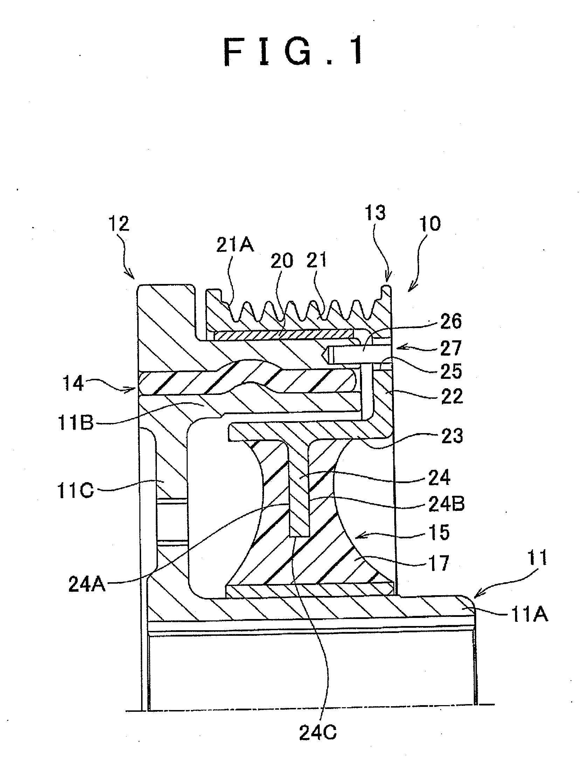

A first embodiment of the invention will be described with reference to FIG. 1. A damper pulley 10 is attached to, for example, a crankshaft (not shown) of an engine of a motor vehicle, and is used with a V belt wrapped around the outer periphery of the damper pulley 10. The damper pulley 10 is used to drive various accessories mounted in the motor vehicle, for example, an alternator, a water pump, a cooler compressor, etc.; by transmitting rotating motive power of the crankshaft, produced by the engine, to the accessories via the V belt.

The damper pulley 10 is constructed of: a hub 11; an inertial mass 12 and a pulley 13 that are concentrically disposed over the outer peripheral side of the hub 11; a first elastic material piece 14 that is interposed between the hub 11 and the inertial mass 12; a second elastic material piece 15 that is interposed between the hub 11 and the pulley 13; and a radial bearing 20 that is interposed between the pulley 13 and the inertial mass 12.

The hub 11 is made up of a cylindrical inner hub portion 11A; a cylindrical outer hub portion 11B that is positioned at the outer peripheral side of the inner hub portion 11A and concentric with the inner hub portion 11A; and a connecting hub portion 11C that extends in radial directions and that connects the inner hub portion 11A with the outer hub portion 11B. A cylindrical ring 17 is press-fitted to the outer periphery of the inner hub portion 11A. Although not shown in FIG. 1, the inner periphery of the inner hub portion 11A is constructed so that an axial end of the crankshaft is fixed to the inner periphery of the inner hub portion 11A and therefore the hub 11 rotates together with the crankshaft.

The outer diameter of the outer hub portion 11 B is smaller than the inner diameter of the inertial mass 12. The annular first elastic material piece 14 is press-fitted into the space between the outer peripheral surface of the outer hub portion 11B and the inner peripheral surface of the inertial mass 12, with such a clearance required for tightening thereof. Therefore, the hub 11 is elastically connected to the inertial mass 12 via the first elastic material piece 14. The first elastic material piece 14 is formed from a rubber or rubber-like elastic material that has high heat resistance and mechanical strength. Accordingly, vibrations of the inertial mass 12 relative to the hub 11 via the first elastic material piece 14, which are transferred from the crankshaft to the hub 11, are damped.

The outer peripheral surface of the outer hub portion 11 B and the inner peripheral surface of the inertial mass 12 have a ridge and a groove, respectively, that correspond to each other and that extend continuously in circumferential directions. Therefore, the first elastic material piece 14, which is pressed into the space between the outer hub portion 11B and the inertial mass 12 and thus compressed between the outer hub portion 11B and the inertial mass 12, has a protrusion extending radially outward at an intermediate position in the direction of the axis. Accordingly, the inertial mass 1 is less likely to slide in the axial direction relative to the outer hub portion 11B.

The pulley 13 includes a generally cylindrical outer pulley portion 21 that is disposed at an outer peripheral side of the inertial mass 12, a connecting pulley portion 22 that extends radially inward from a rear end portion of the outer pulley portion 21 that is rear in the direction of the axis, and a cylindrical inner pulley portion that is bent from an inner peripheral side of the connecting pulley portion 22 and that extends toward a front face of the pulley 13 in the direction of the axis. Poly-V grooves 21 A that engage with a V belt (not shown) are formed in an outer peripheral surface of the outer pulley portion 21.

A disc-shaped support portion 24 is integrally connected to an axially intermediate portion of an inner peripheral surface of the inner pulley portion 23 (that is located at an intermediate position in the direction of the axis). The support portion 24 extends radially inward from the inner pulley portion 23. The second elastic material piece 15 is disposed astride the support portion 24 so that the second elastic material piece 15 is substantially equally distributed between the axial front and rear sides of support portion in the direction of the axis of the pulley 13. An outer peripheral surface of the second elastic material piece 15 is vulcanised bonded to the inner peripheral surface of the inner pulley portion 23, a front surface 24A of the support portion 24, a rear surface 24B of the support portion 24, and an inner peripheral surface of the support portion 24. The inner peripheral surface of the second elastic material piece 15 is adhered to an outer peripheral surface of the ring 17 by vulcanisation. The annular second elastic material piece 15 is formed continuously in the circumferential direction and is disposed between the inner peripheral surface of the inner pulley 23 and the outer peripheral surface of the ring 17. Because the second elastic material piece 15 is equally distributed between the front and rear sides of the support portion 24 in the direction of the axis of the pulley 13, the thicknesses of the front and rear-side portions of the second elastic material piece 15, measured from the support portion in the direction of the axis of the pulley 13, are equal, thus enhancing the function of centering when vibration occurs along the axis of the pulley 13.

The support portion 24 extends radially inward from an axially intermediate portion of the inner pulley portion 23. The support portion 24 is integrally formed with the inner pulley portion 23 by a split press process or the like.

Thus, because the support portion 24 of the pulley 13 is sandwiched on the front and rear sides in the axial direction of the pulley 10 by the second elastic material piece 15, the second elastic material piece 15 damps axial vibrations of the pulley 13 when such vibrations occurs. Specifically, when axial vibrations of the pulley 13 occur, a force that tends to shear the second elastic material piece 15 occurs in the axially forward and rearward directions from the inner peripheral surface 24C of the support portion 24, and the shearing force damps the vibration of the pulley 13 in the axial direction. Therefore, vibration of the pulley 13 in the axial direction is restrained without the need to provide a thrust bearing to maintain the position the pulley 13 in the axial direction.

The second elastic material piece 15 is made of a rubber or rubberlike elastic material that is excellent in heat resistance and mechanical strength. Because the hub 11 and the pulley 13 are elastically connected via the second elastic material piece 15, torsional vibrations from the crankshaft to the hub 11 are absorbed by the second elastic material piece 15, so that rotation is smoothly transmitted from the hub 11 to the pulley 13.

The radial bearing 20 is interposed between the inner periphery of the outer pulley 21 and the outer periphery of the inertial mass 12. The pulley 13 is supported by the radial bearing 20 concentrically with the center of rotation of the crankshaft, and is radially supported so as to be rotatable relatively to the inertial mass 12. The radial bearing 20 is a sliding bearing in this embodiment.

An engagement hole 25 that has a groove that is elongated in the direction of rotation is formed In the connecting pulley portion 22 of the pulley 13. The engagement hole 25 is loosely engaged with an engagement pin 26 that protrudes from an end surface of the inertial mass 12, with appropriate clearances on opposite sides of the engagement pin 26 in the circumferential direction. The configuration forms a stopper mechanism 27 that restricts the relative rotational angle of the pulley 13 to the hub 11 within a predetermined range of angle. The stopper mechanism 27 prevents the second elastic material piece 15 from twisting excessively and therefore from breaking.

In the harmonic balancer 10, the inner hub portion 11A of the hub 11 is attached to an axial end portion of the crankshaft of the engine (not shown), and is therefore rotated together with the crankshaft. Rotation of the crankshaft is transmitted from the hub 11 to the pulley 13 via the second elastic material piece 15, and then to accessories, such as the alternator and the like, via the V belt (not shown) wrapped around the pulley 13.

Because the engine converts the reciprocating motion of the pistons into the rotating motion of the crankshaft, periodic torsional vibrations occur on the crankshaft as the crankshaft rotates. The torsional vibration is absorbed by the second elastic material component 15. Therefore, the torsional vibration transmitted to the pulley 13 is reduced, and rotation is smoothly transmitted from the pulley 13 to the accessories and the like. Because the inertial mass 12 is supported on the hub 11 via the second elastic material piece 14 so as to be able to vibrate in the rotational direction relative to the hub 11, torsional vibration of the inertial mass 12 offsets the torsional vibration that is transmitted from the crankshaft to the hub 11.

The inertial mass 12 and the hub 11 are processed into predetermined shapes by casting and cutting. The pulley 13 is processed into a predetermined shape by a bending process, a plastic deformation process, and cutting. The second elastic material piece 15 is formed by vulcanisation by setting the pulley 13 and the ring 17 in a mold, and pouring a rubber or rubberlike material into the mold, and applying pressure and heat thereto. If a primer is applied to the pulley 13 and the ring 17, the second elastic material piece 15 is vulcanised-bonded to portions of the pulley 13 and the ring 17. In particular, the primer is first applied to the outer peripheral surface of the ring 17, the inner peripheral surface of the inner pulley portion 23, the front and rear surfaces of the support portion 24, and the inner peripheral surface of the support portion 24, and the the second elastic material piece 15 is vulcanised-bonded to these surfaces. The material used to form the second elastic material piece 15 in this embodiment is, for example, an EPDM (ethylene- propylene-diene monomer) rubber.

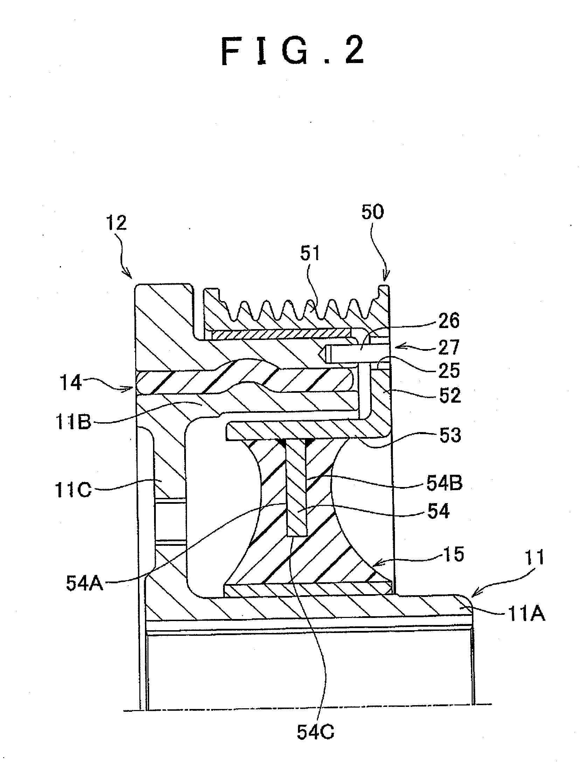

FIG. 2 shows a damper pulley according to a modification of the first embodiment. Because the modified damper pulley differs from the damper pulley of the first embodiment in only the pulley, those component parts are denoted using the same reference characters, and will not be described again below. In a pulley 50 shown in FIG. 2, a cylindrical outer pulley portion 51, a disc-shape connecting pulley portion 52, and a cylindrical inner pulley portion 53 are formed from a steel plate, and a disc-shape support portion 54 is welded to an axially intermediate portion of an inner peripheral surface of the inner pulley portion 53, which is located at an intermediate position in the direction of the axis, so that the support portion 54 extends radially inward from the inner pulley portion 53. allows the outer peripheral side of the support portion 54 to be welded to the inner pulley 53 so that space is equally distributed between the front and rear sides of the support portion 54 in the direction of an axis of the pulley 50. The second elastic material piece 15 is vulcanised-bonded to the inner peripheral surface of the inner pulley portion 53, a front surface 54A of the support portion 54, a rear surface 54B of the support portion 54, and an inner peripheral surface 54C of the support portion 53.

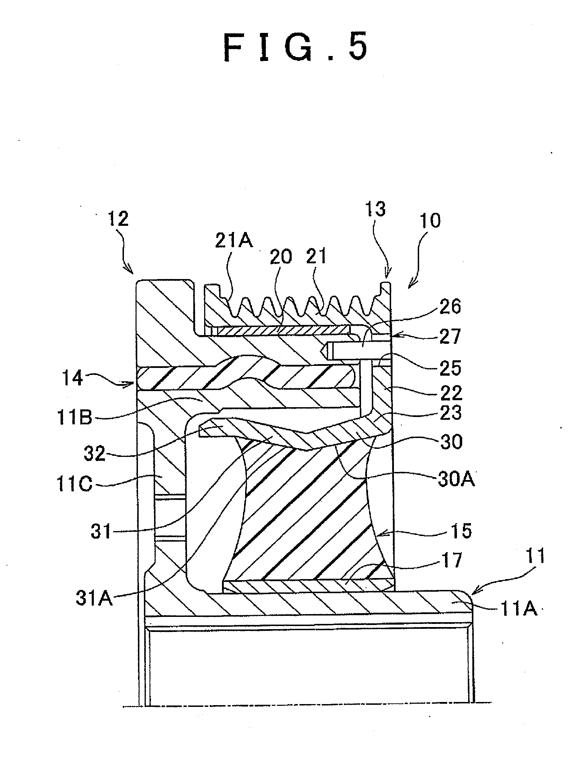

A second embodiment of the invention will be described with reference to FIG 5.

In a sectional view in FIG. 5, an inner pulley portion 23 is bent radially inward into a dogleg shape. Specifically, a first inclined portion 30 that is oblique to the axis of the pulley 13 and a second inclined portion 31 that is oblique to the axis of the pulley 13 are formed symmetrically in the axial direction with respect to an axially intermediate position along the inner pulley portion 23. Furthermore, a horizontal portion 32 that is parallel with the axis of the pulley 13 is formed on an opposite side of the second inclined portion 31 to the first inclined portion 30. A first inclined surface 30A of an inner peripheral surface of the first inclined portion 30 is parallel with the first inclined portion 30. Likewise, a second inclined surface 31A of an inner peripheral surface of the second inclined portion 31 is parallel with the second inclined portion 31.

The outer peripheral surface of the second elastic material piece 15 is vulcanised bonded to the first inclined surface 30A and the second inclined surface 31A of the inner pulley portion 23. The inner peripheral surface of the second elastic material piece 15 is vulcanised bonded to the outer peripheral surface of the ring 17. The annular second elastic material piece 15 is formed continuously in the circumferential direction and is disposed between the inner peripheral surface of the inner pulley portion 23 and the outer peripheral surface of the ring 17. Because the second elastic material piece 15 is equally distributed between the front and rear sides, in the direction of the axis of the pulley 13, of a junction between the first inclined surface 30A and the second inclined surface 31A, the thicknesses of the front and rear-side portions of the second elastic material piece 15 measured from the junction between the first inclined surface 30a and the second inclined surface 31A in the direction of the axis of the pulley 13 are equal, thus facilitating the centering function when vibrations occur in the axial direction of the pulley 13.

Because the first inclined portion 30, the second inclined portion 31 and the horizontal portion 32 are formed by bending a sheet of steel, the possibility of any one of the first inclined portion 30, the second inclined portion 31 and the horizontal portion 32 bending or breaking due to the force received from the second elastic material piece 15 is very low.

Thus, because the second elastic material piece 15 is connected to the first inclined surface 30A and the second inclined surface 31A, which are inclined in different directions, this configuration damps axial vibrations of the pulley 13 when such vibrations occur. Specifically, when the pulley 13 moves forward in the axial direction, a pulling reaction force from the second elastic material piece 15 acts on the first inclined surface 30A and, simultaneously, a compressing reaction force from the second elastic material piece 15 acts on the second inclined surface 31 A, thereby forcing the pulley 13 to move rearward in the axial direction.

In contrast, if the pulley 13 moves rearward in the axial direction, a compressing reaction force from the second elastic material piece 15 acts on the first inclined surface 30A and, simultaneously, a pulling reaction force from the second elastic material piece 15 acts on the second inclined surface 31A, thus forcing the pulley 13 to move forward in the axial direction. The compressing reaction force and the pulling reaction force from the second elastic material piece 15 thus damp vibration in the axial direction of the pulley 13. Therefore, it is possible to damp axial vibrations of the pulley 13 without using a thrust bearing to position the pulley 13 in the axial direction.

Although the invention has been described with reference to example embodiments above, it is to be understood that the invention is not limited to the described embodiments. To the contrary, the invention is intended to cover various modifications and equivalent arrangements. In addition, while the various elements of the disclosed invention are shown in various example combinations and configurations, other combinations and configurations, including more, less or only a single element, are also within the scope of the appended claims.

The first and second embodiments may be modified so that, the second elastic material piece 15 may be vulcanisation-molded using a mold, and an adhesive may be used to fix the pulley 13 to the ring 17.

In addition, the first and second embodiments may further be modified so that the second elastic material piece 15 is fixed directly to the hub 11 by an adhesive, without using the ring 17.

Furthermore, although the inner pulley portion 23 has a protruded portion and the second elastic material piece 15 has a depression portion in the first and second embodiments, an alternative configuration in which the inner pulley portion 23 has a depression portion, and the second elastic material piece 15 has a protruded portion may be adopted. A harmonic balancer (10) includes: a hub (11); a pulley (13); an annular inertial mass (12); and an elastically deformable second elastic material member (15) whose inner peripheral side is connected to an outer periphery of an inner hub portion (11A) and whose outer peripheral side is connected to an inner periphery of an inner pulley portion (23). An inner peripheral surface of the inner pulley portion (23) the pulley (13) includes a radially protruded portion (24: 54: 31A). The second elastic material member (15) has a depression portion that is depressed radially inward. The protruded portion (24: 54: 31A) is fitted in the depression portion.

## Claims

1. A harmonic balancer (10) includes:
a hub (11) whose cylindrical outer hub portion (11B) is connected to an outer peripheral side of a disc-shape connecting hub portion (11C) and whose cylindrical inner hub portion (11A) is connected to an inner peripheral side of the disc-shape connecting hub portion (11C);
a pulley (13) whose cylindrical outer pulley portion (21) is connected to an outer peripheral side of a disc-shape connecting pulley portion (22) and whose cylindrical inner pulley portion (23) is connected to an inner peripheral side of the disc-shape connecting pulley portion (22);
an annular inertial mass (12) disposed at an outer peripheral edge of the cylindrical outer hub portion (11B);
an elastically deformable second elastic material member (15) whose inner peripheral side is connected to an outer periphery of the cylindrical inner hub portion (11A) and whose outer peripheral side is connected to an inner periphery of the cylindrical inner pulley portion (23);
an elastically deformable first elastic material member (14) that interconnects the hub (11) and the inertial mass (12); and
a radial bearing (20) that supports the pulley (13) relative to the hub (11) and that permits the pulley (13) to rotate relative to the hub (11),
the harmonic balancer (10) **characterised in that**:
a protruded portion (24: 54: 31A) that extends radially inward is formed in an inner peripheral surface of the inner pulley portion (23);
a depression that extends in a radially inward direction is formed in the second elastic material member (15) ; and
the protruded portion (24: 54: 3 1 A) is fitted in the depression portion.

2. The harmonic balancer (10) according to claim 1, wherein:
the pulley (13) includes a disc-shaped support portion (24, 54) that extends radially inward from the inner peripheral surface of the inner pulley portion (23);
the second elastic material member (15) is connected to the support portion (24); the second elastic material member (15) is substantially equally distributed between an axially front side and an axially rear side of the support portion (24) in a direction of an axis of the pulley (13); and
the second elastic material piece is connected to the inner peripheral surface of the inner pulley portion (23) and to the support portion (24) of the inner pulley portion (23).

3. The harmonic balancer (10) according to claim 2, wherein the pulley (13) and the support portion (24) are an integrated member or separate members.

4. The harmonic balancer (10) according to claim 1, wherein:
the inner peripheral surface of the inner pulley portion (23) includes a first inclined surface (30) and a second inclined surface (31) that are oblique to the axis of the pulley (13) and that are substantially symmetric in the direction of the axis about an intermediate portion of the inner peripheral surface in the direction of the axis; and
the second elastic material member (15) is connected to the first inclined surface (30) and to the second inclined surface (31).

5. The harmonic balancer (10) according to claim 4, wherein the protruded portion (31A) is formed by the first inclined surface (30) and the second inclined surface (31).

6. The harmonic balancer (10) according to claim 5, wherein the first inclined surface (30) and the second inclined surface (31) are formed by bending the inner pulley portion (23).

7. The harmonic balancer (10) according to any one of claims 2 to 6, wherein a cylindrical ring (17) is connected to the inner peripheral side of the second elastic material member (15), and the ring (17) is press-fitted to an outer periphery of the inner
hub portion (11A).

8. The harmonic balancer (10) according to claim 7, wherein the second elastic material member (15) is vulcanised-bonded to an outer peripheral surface of the ring (17) and the inner peripheral surface of the inner pulley portion (23).

9. The harmonic balancer (10) according to claim 7, wherein the second elastic material member (15) is vulcanised-bonded to the outer peripheral surface of the ring (17), the first inclined surface (30) of the inner pulley portion (23) and the second inclined surface (31) of the inner pulley portion (23).

10. A harmonic balancer (10) includes:
a hub (11) whose cylindrical outer hub portion (11B) is connected to an outer peripheral side of a disc-shape connecting hub portion (11C) and whose cylindrical inner hub portion (11A) is connected to an inner peripheral side of the disc-shape connecting hub portion (11C);
a pulley (13) whose cylindrical outer pulley portion (21) is connected to an outer peripheral side of a disc-shape connecting pulley portion (22) and whose cylindrical inner pulley portion (23) is connected to an inner peripheral side of the disc-shape connecting pulley portion (22);
an annular inertial mass (12) disposed at an outer peripheral edge of the cylindrical outer hub portion (11B);
an elastically deformable second elastic material member (15) whose inner peripheral side is connected to an outer periphery of the cylindrical inner hub portion (11A) and whose outer peripheral side is connected to an inner periphery of the cylindrical inner pulley portion (23);
an elastically deformable first elastic material member (14) that interconnects the hub (11) and the inertial mass (12); and
a radial bearing (20) that supports the pulley (13) relative to the hub (11) and that permits the pulley (13) to rotate relative to the hub (11),
the harmonic balancer (10) **characterised in that**:
a depression that extends in a radially outward direction is formed in an inner peripheral surface of the inner pulley portion (23);
a protruded portion that extends radially outward is formed in the second elastic material member (15); and
the protruded portion is fitted in the depression portion.
